# EUROPEAN PATENT APPLICATION

(11) **EP 2 423 680 A1**
(43) Date of publication of application: **29.02.2012**
(21) Application number: 11178352.8
(22) Date of filing: 22.08.2011
(51) Int. Cl.: G01N 27/62, G01N 27/68, G01N 27/70, G01N 30/64

(54) **Nanowire based gas ionization sensor**

(30) Priority: 24.08.2010 US 376658 P
(71) Applicant: Stichting IMEC Nederland, 5656 AE Eindhoven (NL)
(72) Inventor: Offermans, Peter, 5611 SZ Eindhoven (NL)
(74) Representative: Sarlet, Steven Renaat Irène

(57) **Abstract**

Gas ionization sensor comprising at least one sensing element on a substrate. The sensing element comprises: at least one nanowire; a counter electrode which surrounds the nanowire, the surrounding electrode being electrically isolated from the nanowire and being at a predetermined gap from the nanowire, the gap allowing penetration of a gas or a gas mixture between the nanowire and the surrounding electrode; a voltage source electrically connected between the nanowire and the surrounding electrode for providing a voltage difference between the nanowire and the surrounding electrode; and measurement circuitry for measuring a breakdown voltage and/or an electrical discharge current and/or a prebreakdown current through the gap.

## Description

### Technical field

This invention relates to gas ionization sensors, more in particular to nanowire based gas ionization sensors.

### Background art

Ionization sensors based on the electrical breakdown of a gas or a gas mixture at the tips of carbon nanotubes, nanorods and nanowires have been reported in literature. The sharp tips of elongated nanostructures generate very high electrical fields at relatively low voltages, thereby lowering breakdown voltages several-fold in comparison to traditional electrodes and thereby enabling compact, battery powered and safe operation of such sensors.

In US 2006/0251543 an ionization sensor is described, the ionization sensor comprising a carbon nanotube (CNT) electrode as an anode and a planar aluminum electrode as a cathode, the longitudinal axis of the CNTs being oriented perpendicular to the plane of the aluminum electrode, and a tip of the CNT being at a distance of 150 micrometer from the aluminum electrode. The incorporation of CNTs instead of a planar anode reduces the breakdown voltage of various gases (He, Ar, Air, CO₂, N₂, O₂ and NH₃) by 65%. With a CNT anode, breakdown voltages were in the range between 150 V and 450 V for the different gases. It was found that the breakdown voltage in vacuum is unique for each of the gases and that it does not vary significantly with gas pressure within the range between 10⁻⁵ mol/l and 10⁻¹ mol/l. Continuous discharge currents increased about six-fold as compared to structures with a planar anode and varied logarithmically with gas concentration in the range between 10⁻⁶ mol/l and 10⁻¹ mol/l. This makes a sensitive detection of dilute gas concentrations down to 10⁻⁶ Mol/l (∼0.1 Torr) possible. At very low gas concentrations (below 0.1 Torr), the breakdown voltage increases strongly as predicted by Paschen's law. For mixtures of gases with air, the breakdown voltage was observed to scale with the gas concentration down to 1 %, where the breakdown voltage strongly increases to that in pure air. This indicates that distinction of gases in air is possible down to a concentration of 1 %. When combined with gas chromatography, gas mixtures may be detected in the low ppm concentration range.

Although ionization sensors incorporating elongated nanostructures such as CNTs have shown to reduce the breakdown voltage compared to sensors having planar electrodes, the breakdown voltages reported in US 2006/0251543 (150 V to 450 V) are still too high to be of use in low power autonomous sensing systems.

Further reductions in breakdown voltage are possible by reducing the inter-electrode distance. In "A novel gas-ionization sensor based on aligned multi-walled carbon nanotubes", G. Hui et al, Meas. Sci. Techol. 17 (2006) 2799-2805, the breakdown voltage of air at atmospheric pressure is determined using anodized aluminum templated CNT films with a varying anode-cathode distance. The breakdown voltage was found to decrease from about 400V to 200V for an inter-electrode distance decreasing from 150 micrometer to 20 micrometer. The breakdown voltage was not affected significantly by a temperature variation in the range of 0 to 25°C and humidity above 50%RH. A further reduction in inter-electrode distance is needed to achieve still lower breakdown voltages.

In "Ionization gas sensing in a microelectrode system with carbon nanotubes", Applied Physics Letters 89, 213502 (2006), Z. Hou et al introduce ionization gas sensing in a microelectrode system using carbon nanotubes as electrode materials in a horizontal geometry. Ionized gas molecules are confined near the anode and cathode by the horizontal device geometry. The confinement of ionized gas molecules leads to an effective distance between the electrodes of 6 micrometer to 12 micrometer. The threshold voltage and current were investigated for air, He, CO₂ and mixtures thereof, at atmospheric pressure. It was found that even at these small inter-electrode distances, the threshold behavior of the discharges is still sensitive to the gas species. Breakdown voltages varied in the range between 4 V and 40 V, depending on device geometry and gas species. However, when using these sensors at ambient atmosphere (air), the carbon nanotubes can easily be oxidized during breakdown and even before breakdown, e.g. by oxygen present in the air.

In "Field ionization of argon using β-phase W nanorods", J.P. Singh et al, Applied Physics Letters Vol. 85, No 15, 3226, a system is shown wherein one electrode consists of a plurality of vertical tungsten nanorods separated from a horizontal planar counter electrode by a spacing of only 400 nm controlled by a piezo motor. Due to the small spacing, the voltage needed for ionization is strongly reduced, to a voltage in the order of 3V to 4V. It is a disadvantage of this approach that the nanorods and the counter electrode are fabricated separately and that the distance between the nanorods and the counter electrode is controlled by a piezo driven motor. This may limit the possibilities for use as a gas ionization sensor.

### Disclosure of the invention

It is an aim of the invention to provide a nanowire-based gas ionization sensor which can operate at low breakdown voltages and can be fabricated reproducibly and with a well controlled distance between nanowire and counter electrode.

This aim is achieved according to the invention as defined in the first claim.

The invention provides a gas ionization sensor comprising at least one sensing element, preferably a plurality of sensing elements, on a substrate, wherein the at least one sensing element comprises: at least one nanowire, the at least one nanowire comprising a bottom, a top and an elongated intermediate part between the bottom and the top, the bottom being closer to the substrate than the top; a counter electrode which surrounds the bottom and at least part of the intermediate part of the at least one nanowire, the surrounding electrode being electrically isolated from the at least one nanowire and being at a predetermined gap from the at least one nanowire, the gap allowing penetration of a gas or a gas mixture between the at least one nanowire and the surrounding electrode; a voltage source electrically connected between the at least one nanowire and the surrounding electrode for providing a voltage difference between the at least one nanowire and the surrounding electrode; and measurement circuitry for measuring a breakdown voltage and/or an electrical discharge current and/or a prebreakdown current through the gap.

It is an advantage of a gas ionization sensor according to the invention that the sensing elements can be fabricated reproducibly, with a well controlled distance between the at least one nanowire (first electrode) and the surrounding electrode (second electrode), i.e. with a well controlled size of the gap, such as for example in the sub-micrometer range. Such accurate control is possible by using a sacrificial layer between the at least one nanowire and the surrounding electrode for defining the distance. Suitable fabrication processes are for example described in EP2180314. However, other suitable fabrication processes known to a person skilled in the art may be used.

In embodiments of the present invention, the measured breakdown voltage allows identification of at least one gas present between the at least one nanowire and the surrounding electrode and the corresponding continuous discharge current allows determining the concentration of the identified gas. In embodiments of the present invention, measuring a prebreakdown current allows both identification of at least one gas and determining its concentration.

It is an advantage of a gas ionization sensor according to the invention that it can operate at low breakdown voltages by the use of nanowires and surrounding counter electrodes. Therefore, the ionization gas sensor of the invention can advantageously be used in low power autonomous sensing systems.

The gas to be detected can be a pure gas, it can be present in a background gas such as air or it can be present in a gas mixture. In embodiments of the invention, the gas ionization sensor can also be provided for detecting different gases in a gas mixture. It can also be used in combination with a gas chromatography system.

In preferred embodiments, the at least one nanowire has a diameter smaller than (about) 500 nm, preferably smaller than (about) 100 nm, for example smaller than (about) 50 nm.

The distance between the first electrode (nanowire) and the second electrode (surrounding electrode) or the gap size can for example be in the range between a few hundreds of nanometers and several micrometers. However, the present invention is not limited thereto and both smaller and larger distances can be used, for example depending on the allowable voltages. In preferred embodiments, the gap between the at least one nanowire and the surrounding counter electrode is smaller than (about) 1 micrometer, e.g. in the order of (about) 100 nm. Such a small gap can result in a relatively high electric field at a relatively low voltage difference between the first electrode and the second electrode and thus very low breakdown voltages.

The gas ionization sensor according to the invention may have properties (e.g. dimensions, materials) to operate at a breakdown voltage lower than (about) 50 V, preferably lower than (about) 30 V, more preferably lower than (about) 10 V.

In embodiments of the invention, the surrounding electrode can partially surround the elongated intermediate part of the at least one nanowire, i.e. the height of the nanowire can be larger than the height of the surrounding electrode. In embodiments of the invention, the surrounding electrode fully surrounds the intermediate part of the at least one nanowire, i.e. the height of the nanowire is substantially the same or is smaller than the height of the surrounding electrode. The height of the surrounding electrode can for example be in the range between (about) 50 nm and 10 µm or between (about) 80 nm and 5 µm, particularly between (about) 500 nm and 2 µm.

A nanowire is an elongated structure of a cyrstalline or polycrystalline electrically conducting or semiconducting material having a diameter smaller than (about) 1 micrometer, typically smaller than (about) 100 nm. A nanowire is made in a conductive material, for example one of the following materials: group IV elements such as Si, Ge, etc., and combinations thereof, alloys of group III/V elements such as InAs, GaAs, InP, GaP, GaN, and combinations thereof, alloys of group II/Vl elements such as ZnS, ZnSe, CdS. CdSe and combinations thereof, metaloxides such as ZnO, In₂O₃, W₂O₃, and combinations thereof, or metals such as for example Au or W and combinations thereof. The nanowires can be made with methods such as VLS (Vapour Liquid Solid) growth, direct etching or any other method known in the field.

Furthermore doping of part of the nanowire or the whole nanowire can be done. For example the bottom of each nanowire can be doped in order to realise a good Ohmic contact to the underlying substrate. Doping of the intermediate part can modify the sensing performance of the device. For example, doping of the intermediate part can enable higher current densities.

In certain embodiments the nanowires can be provided essentially perpendicular to the substrate (i.e. having their longitudinal direction substantially orthogonal to the substrate surface), but they can also make an angle different from (about) 90° with the substrate. The angle with the substrate (i.e. the angle between the longitudinal direction of the nanowires and the surface plane of the substrate) can vary between (about) 45° and 90°, or between (about) 60° and 90°, or between (about) 70° and 90°, or between (about) 80° and 90°. Preferably the plurality of nanowires within a sensing device have essentially the same angle with the substrate, but different angles with the substrate for the different nanowires is possible.

The surrounding electrode is preferably made of an electrically conductive material, such as for example Au, Cr, Pt, Cu, Ti, Ta, Ru, Ni, Ge, Al, Mo, conducting Si, TiN, W and combinations thereof. Also a stack of conducting materials or metals can be used. Additional layers can be present underneath the conducting material or metal, for example to improve adhesion of the conducting layers or to avoid diffusion of the conducting material in other layers.

The at least one nanowire can be located close to one part of the surrounding electrode and further away from other parts. In preferred embodiments, wherein a sensing element comprises a single nanowire with a corresponding surrounding electrode, preferably the nanowire is located in the center of the surrounding electrode. Preferably the distance between the nanowire and the electrode is similar at all locations of the electrode. However, the present invention is not limited thereto and the nanowire can also be located outside the center of the surrounding electrode.

The surrounding electrode can have different geometries. A cross section through the surrounding electrode parallel to the substrate can have a circular shape, an oval shape, a polygon shape or any other suitable shape known to a person skilled in the art. In preferred embodiments the shape of this cross section is essentially circular.

In embodiments of the invention, each sensing element comprises a single nanowire with a corresponding surrounding electrode or counter electrode. However, the invention is not limited thereto and a surrounding electrode or counter electrode can surround more than one nanowire.

In preferred embodiments, the gas ionization sensor comprises a plurality of sensing elements, e.g. an array of sensing elements. In such a sensor comprising a plurality of sensing elements, preferably the nanowires of the plurality of sensing elements are electrically connected, and preferably the surrounding electrodes of the plurality of sensing elements are electrically connected.

In embodiments of the invention, the gas ionization sensor can also comprise more than one array of sensing elements, e.g. a plurality of arrays of sensing elements. In such a sensor comprising a plurality of arrays, the properties of the sensing elements within an array can be the same, and the properties of the sensing elements of different arrays can be different, e.g. to be able to detect different gases in a mixture. Examples of properties of sensing elements that may be different are: the thickness of the nanowires, the size of the gap, the materials used for the nanowires and/or for the surrounding electrodes, the number of nanowires per surrounding electrode, the presence of functionalization layers at a surface of the nanowires and/or of the surrounding electrodes.

### Brief description of the drawings

The invention, both as to organization and method of operation, together with features and advantages thereof, will be further elucidated by reference to the following detailed description when read in conjunction with the accompanying drawings.
Figure 1 schematically shows a 3D view of a nanowire-based sensing element according to one embodiment, showing one nanowire with a surrounding electrode.
Figure 2 schematically shows a cross section of the nanowire-based sensing element of Figure 1.
Figure 3 schematically shows a cross section of a nanowire-based sensing element according to one embodiment wherein the height of the nanowire is smaller than the height of the surrounding electrode.

In the different drawings, the same reference signs refer to the same or analogous elements.

### Modes for carrying out the invention

In the following detailed description, numerous specific details are set forth in order to provide a thorough understanding of the invention and how it may be practiced in particular embodiments. However, it will be understood that the present invention may be practiced without these specific details. In other instances, well-known methods, procedures and techniques have not been described in detail, so as not to obscure the present invention. While the present invention will be described with respect to particular embodiments and with reference to certain drawings, the invention is not limited hereto. The drawings included and described herein are schematic and are not limiting the scope of the invention. It is also noted that in the drawings, the size of some elements may be exaggerated and, therefore, not drawn to scale for illustrative purposes.

Furthermore, the terms first, second, third and the like in the description, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising" should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.

A gas ionization sensor according to one embodiment of the invention described herein comprises at least one sensing element, preferably a plurality of sensing elements, on a substrate, wherein the at least one sensing element comprises: at least one nanowire, the at least one nanowire comprising a bottom, a top and an elongated intermediate part between the bottom and the top, the bottom being closer to the substrate than the top; a surrounding electrode surrounding the bottom and at least part of the intermediate part of the at least one nanowire, the surrounding electrode being electrically isolated from the at least one nanowire; a gap between the at least one nanowire and the surrounding electrode for allowing penetration of a gas or a gas mixture between the at least one nanowire and the surrounding electrode; a voltage source electrically connected between the at least one nanowire and the surrounding electrode for providing a voltage difference between the at least one nanowire and the surrounding electrode; and measurement circuitry for measuring a breakdown voltage and/or an electrical discharge current and/or a prebreakdown current through the gap.

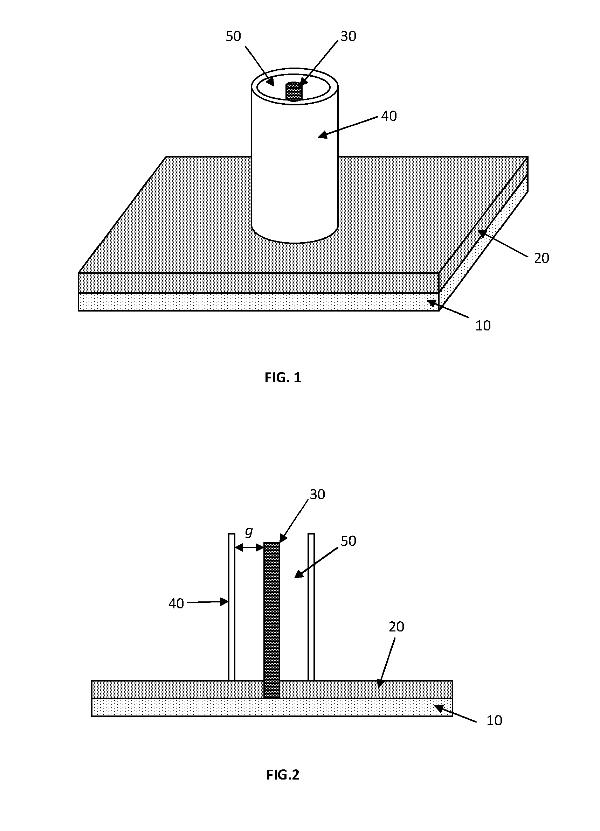

Figure 1 schematically illustrates a 3D view of an exemplary embodiment of a sensing element of a nanowire based gas ionization sensor according to one embodiment. Figure 2 shows a cross section of the sensing element of Figure 1 in a plane orthogonal to the substrate. Figure 1 and Figure 2 only show a single nanowire 30 with a surrounding electrode 40, but in practical devices an array of nanowires with corresponding surrounding electrodes can be used, or more than one nanowire may be surrounded by a single surrounding electrode.

As illustrated in Figure 1 and Figure 2, a nanowire 30 is provided on an electrically conductive substrate 10 and is preferably oriented orthogonal to the substrate surface. In the example shown, the nanowire 30 is in electrical contact with the substrate 10. Therefore, an electrical contact to the nanowire can be provided at the bottom of the nanowire, through the conductive substrate. In a device comprising a plurality of sensing elements, the conductive substrate can be used for providing an electrical connection between the plurality of nanowires. The nanowire 30 is surrounded by a surrounding electrode 40. The surrounding electrode 40 is separated from the substrate 10 by an insulating layer 20, also providing an electrical insulation between the surrounding electrode 40 and the nanowire 30. In a device comprising a plurality of sensing elements, the plurality of surrounding electrodes can be electrically connected by providing an electrically conductive layer over the insulating layer 20. In between the nanowire 30 and the surrounding electrode 40 there is a gap 50 in which a gas or gas mixture can penetrate. The gap has a size g, being defined as the distance between the nanowire and the surrounding electrode in a direction substantially orthogonal to the longitudinal direction of the nanowire.

In the example shown in Figure 1 and Figure 2, the surrounding electrode 40 is a cylindrical electrode and the nanowire 30 is located in the centre of the surrounding electrode. However, the invention is not limited thereto and the surrounding electrode can have another suitable shape and/or the nanowire can be located outside the centre of the surrounding electrode, leading to a gap size *g* that is different in different directions orthogonal to the longitudinal direction of the nanowire.

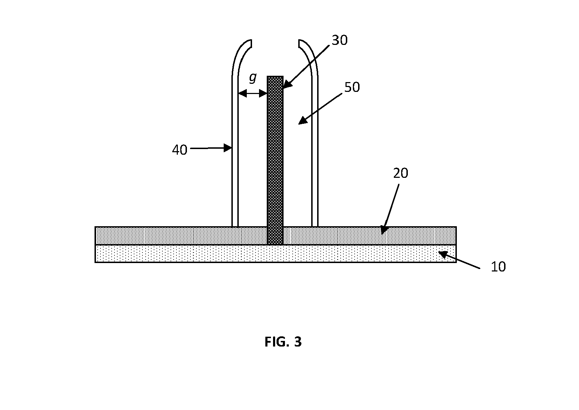

In certain embodiments, the surrounding electrode 40 fully surrounds the nanowire 30 in a height direction or longitudinal direction of the nanowire, i.e. the height of the surrounding electrode 40 is preferably at least as large as the height of the nanowire 30. Figure 3 shows a schematic cross section of a nanowire-based sensing element according to one embodiment wherein the height of the surrounding electrode 40 is larger than the height of the nanowire 30.

In operation, a DC voltage is applied between the nanowire 30 and the surrounding electrode 40, resulting in an electric field in the gap between the nanowire and the surrounding electrode. Due to the small diameter and the sharp tip of the nanowire and the small gap size g, a high electric field can be obtained in the gap at low applied voltages. When a gas penetrates the gap, gas molecules can be ionized by the electric field, leading to a discharge, e.g. corona discharge, resulting in electrical breakdown and the establishment of a self-sustaining continuous discharge current between the nanowire and the surrounding electrode.

In certain embodiments, the DC voltage applied between the nanowire 30 and the surrounding electrode 40 can be positive, i.e. the nanowire can be positive with respect to the surrounding electrode, or the DC voltage can be negative, i.e. the nanowire can be negative with respect to the surrounding electrode. In embodiments with a negative DC voltage, secondary electrons emitted from the nanowire can create more ionizing collisions and can lower the breakdown voltage. In such embodiments positive ions are attracted by the nanowire, which may induce damage.

It is known that at constant temperature and pressure, for a given electrode distance or gap size g, each gas has a distinct and unique breakdown voltage (threshold voltage for ionization) at which a continuous current discharge is generated. By monitoring the breakdown voltage of the gas present in the gap, its identity can be established. By monitoring the self-sustaining discharge current, the gas concentration can be determined.

As opposed to prior art nanowire-based gas ionization sensors, wherein an electrical current is established between a tip or end part of a nanowire and e.g. a planar electrode, in a gas ionization sensor according to one embodiment, an electrical current is established between a top (end part) of a nanowire and a surrounding electrode and between an elongated part of a nanowire and a surrounding electrode. It is an advantage of a gas sensor in one embodiment that the distance between the elongated part of the nanowire and the surrounding electrode can be well controlled, e.g can be better controlled than the distance between a tip of a nanowire and a planar electrode as in prior art gas ionization sensors.

In one embodiment, when the sensor is used for detecting a single predetermined gas, the DC voltage applied between the nanowire and the surrounding electrode can be selected to correspond to a voltage leading to an electric field in between the nanowire and the surrounding electrode that is sufficiently large to result in breakdown. The discharge current between the nanowire and the surrounding electrode is measured, allowing determining the concentration of the predetermined gas.

The voltage applied between the nanowire and the surrounding electrode can also be a varying DC voltage, for example a voltage increasing in time. This approach allows detecting a gas and its concentration by measuring the threshold voltage for discharge and the corresponding discharge current.

Instead of measuring a breakdown voltage and/or a discharge current, measuring a prebreakdown current may be advantageous when using a sensor according to one embodiment. Measuring a prebreakdown current (and avoiding breakdown) can avoid damage that may be induced by corona discharges and breakdown, while still enabling detection of unknown gases and their concentration. As for example described by F. Meng et al in "Dynamic prebreakdown current measurement of nanotips-based gas ionization sensor application at ambient atmosphere", IEEE Sensors Journal, Vol. 9, No. 4, 2009, p 435, prebreakdown current measurements can be static or dymamic. In static measurements the applied voltage is constant and the field ionization currents change upon gas exposure. In a dynamic measurement the voltage between the nanowire and the surrounding electrode varies periodically and accordingly the current varies periodically.

In the case of gas mixtures in air, it is expected that components of the mixture can be identified if their concentration is larger than (about) 1%. In the case of gas mixtures in air, detection of gases with lower concentrations (up to low ppm levels) may be possible by combining gas sensors of one embodiment with gas chromatography, wherein gases or gas mixtures are separated from the air.

The minimum gap spacing needed for identification of gases in a mixture can be experimentally determined by fabricating sensing elements with different, well controlled gap spacings, and by measuring and analyzing their response.

In a gas ionization sensor comprising an array of sensing elements, preferably a same voltage difference is applied for all sensing elements. All nanowires within an array can be electrically connected with each other, for example through the conductive substrate, and all surrounding electrodes can be electrically connected with each other, the nanowires being electrically isolated from the surrounding electrodes. In a gas ionization sensor comprising a plurality of arrays of sensing elements, the applied voltages may be different for the different arrays of sensing elements.

Additionally, the nanowires and/or the surrounding electrodes may be functionalized by providing chemical functional groups to their surface, for example by providing inorganic or organic materials that modify the work function of the surface upon gas absorption. For example, monolayers of redox-active molecules such as porphyrins or metal oxides may be provided. By interaction of a gas with such a monolayer, the work function of the electrode is modified. The change in work function resulting from gas absorption modifies the field-emission characteristics. Such changes in field emission behaviour may be an additional parameter to identify gases, especially in cases wherein field emission is a dominating mechanism rather than primary ionizations. Changes in the work function of the nanowire or of the surrounding electrode that result from gas absorption lead to changes in the (prebreakdown) current. Measuring such changes in the prebreakdown current may thus be used for gas identification and for determining gas concentration.

## Claims

1. Gas ionization sensor comprising at least one sensing element on a substrate, each sensing element comprising:
- at least one nanowire, the at least one nanowire comprising a bottom, a top and an elongated intermediate part between the bottom and the top, the bottom being closer to the substrate than the top;
- a counter electrode at a predetermined gap from the at least one nanowire, the surrounding electrode being electrically isolated from the at least one nanowire, the gap being provided for allowing penetration of a gas or a gas mixture between the at least one nanowire and the counter electrode;
- a voltage source electrically connected to the at least one nanowire and the counter electrode for providing a voltage difference between the at least one nanowire and the counter electrode; and
- measurement circuitry connected to the at least one nanowire and the counter electrode for measuring an electric parameter indicative of ionization or field emission caused by the applied voltage difference in a gas or gas mixture which has penetrated into the gap;
**characterised in that**
- the counter electrode is a surrounding electrode surrounding the bottom and at least part of the intermediate part of the at least one nanowire; and
- the measurement circuitry is provided for measuring a breakdown voltage and/or an electrical discharge current and/or a prebreakdown current through the gap.

2. Gas ionization sensor according to claim 1, **characterised in that** the measurement circuitry is provided for measuring the breakdown voltage for identification of the gas or gas mixture present between the at least one nanowire and the surrounding electrode and for measuring the corresponding continuous discharge current for determining the concentration of the identified gas or gas mixture.

3. Gas ionization sensor according to claim 1, **characterised in that** the measurement circuitry is provided for measuring the prebreakdown current both for identification of the gas or gas mixture and determining its concentration.

4. Gas ionization sensor according to any one of the preceding claims, **characterised in that** the at least one nanowire has a diameter smaller than about 500 nm, preferably smaller than about 100 nm, more preferably smaller than about 50 nm and **in that** the gap between the at least one nanowire and the surrounding electrode is smaller than about 1 micrometer, more preferably in the order of about 100 nm.

5. Gas ionization sensor according to any one of the preceding claims, **characterised in that** each sensing element has properties for operating at a breakdown voltage through the gap which is lower than about 50 V, preferably lower than about 30 V, more preferably lower than about 10 V.

6. Gas ionization sensor according to any one of the preceding claims, **characterised in that** the height of the at least one nanowire is larger than the height of the surrounding electrode.

7. Gas ionization sensor according to any one of the claims 1-5, **characterised in that** the height of the at least one nanowire is substantially the same or is smaller than the height of the surrounding electrode.

8. Gas ionization sensor according to any one of the preceding claims, **characterised in that** the height of the surrounding electrode is in the range between about 50 nm and 10 µm, preferably between about 80 nm and 5 µm, more preferably between about 500 nm and 2 µm.

9. Gas ionization sensor according to any one of the preceding claims, **characterised in that** at least part of each nanowire is doped.

10. Gas ionization sensor according to any one of the preceding claims, **characterised in that** the at least one nanowire is made of one of the following group of materials: group IV elements and combinations thereof, alloys of group III/V elements and combinations thereof, alloys of group II/VI elements and combinations thereof, metaloxides and combinations thereof, metals and combinations thereof.

11. Gas ionization sensor according to any one of the preceding claims, **characterised in that** the surrounding electrode is made of an electrically conductive material.

12. Gas ionization sensor according to any one of the preceding claims, **characterised in that** each sensing element comprises a single nanowire with a corresponding surrounding electrode.

13. Gas ionization sensor according to any one of the preceding claims, **characterised in that** the sensor comprises at least one array of sensing elements, the nanowires of each array of sensing elements being electrically connected to each other, and the surrounding electrodes of each array of sensing elements being electrically connected to each other.

14. Gas ionization sensor according to claim 13, **characterised in that** the sensor comprises a plurality of said arrays, the properties of the sensing elements within the same array being the same and the properties of the sensing elements between different arrays being different.

15. Gas ionization sensor according to claim 14, **characterised in that** at least one of the plurality arrays comprises functionalization layers at a surface of each nanowire of the respective array and/or of each surrounding electrode of the respective array.

16. A low power autonomous sensing system comprising a gas ionization sensor according to any one of the preceding claims.

17. A gas chromatography system comprising a gas ionization sensor according to any one of the claims 1-15.
